# EUROPÄISCHE PATENTANMELDUNG

(11) **EP 4 722 112 A2**
(43) Veröffentlichungstag der Anmeldung: **08.04.2026**
(21) Anmeldenummer: 25201441.0
(22) Anmeldetag: 10.09.2025
(51) Int. Cl.: B65B 23/14, B65G 47/06, B65B 35/44

(54) **PRODUKTHANDHABUNGSVORRICHTUNG SOWIE VERFAHREN ZU EINEM KOMPRIMIEREN VON EINZELNEN PRODUKTGRUPPEN VON TRANSPORTIERTEN PRODUKTEN**

(30) Priorität: 17.09.2024 DE 102024126777
(71) Anmelder: Syntegon Packaging Systems AG, 8222 Beringen (CH)
(72) Erfinder: Wäspi, Raffael, 8261 Hemishofen (CH)
(74) Vertreter: Daub, Thomas

(57) **Zusammenfassung**

Die Erfindung geht aus von einer Produkthandhabungsvorrichtung für eine Verpackungsmaschine, mit zumindest einer Transporteinheit (14) zu einem Transport von Produkten (16) entlang einer Transportrichtung (18) der Transporteinheit (14) und mit zumindest einer Komprimierungseinheit (20) zu einem Komprimieren von einzelnen Produktgruppen, insbesondere quer zur Transportrichtung (18) ausgerichteter Produktreihen, der mittels der Transporteinheit (14) transportierten Produkte (16), wobei die Komprimierungseinheit (20) zumindest ein, insbesondere translatorisch, beweglich gelagertes Komprimierelement (22), insbesondere Stößel, aufweist.

Es wird vorgeschlagen, dass das Komprimierelement (22), insbesondere zumindest temporär, zusammen, vorzugsweise synchron, mit zumindest einem Transportelement (24) der Transporteinheit (14), an dem die Produkte (16) anordenbar sind, entlang der Transportrichtung (18) bewegbar ist.

## Beschreibung

### Stand der Technik

Die Erfindung betrifft eine Produkthandhabungsvorrichtung für eine Verpackungsmaschine, mit zumindest einer Transporteinheit zu einem Transport von Produkten entlang einer Transportrichtung der Transporteinheit und mit zumindest einer Komprimierungseinheit zu einem Komprimieren von einzelnen Produktgruppen der mittels der Transporteinheit transportierten Produkte, wobei die Komprimierungseinheit zumindest ein beweglich gelagertes Komprimierelement aufweist.

Bei bereits bekannten Produkthandhabungsvorrichtungen erfolgt ein Komprimieren mittels eines schwenkbar gelagerten Komprimierelements, das dazu vorgesehen ist, eine Impulskraft, insbesondere einen Schlag auf eine Stirnseite der Produktgruppen der mittels der Transporteinheit transportierten Produkte auszuüben. Das Komprimierelement der bekannten Produkthandhabungsvorrichtungen muss nach einer Schwenkbewegung, durch die die Produktgruppen komprimierbar sind, in eine Ausgangsposition zurückgeschwenkt werden, was zu einer geringen Produktionsleistung der bekannten Produkthandhabungsvorrichtungen infolge einer entsprechend benötigten Rückstellzeit des Komprimierelements führen kann. Zudem können die Produkte, insbesondere bei einer Ausgestaltung der Produkte als Lebensmittel, wie beispielsweise Kekse o. dgl., durch die Ausübung der Impulskraft, insbesondere des Schlags, auf die Produkte beschädigt werden. Ferner können durch die Ausübung der Impulskraft, insbesondere des Schlags, auf die Produkte einzelne Produkte aus der zu komprimierenden Produktgruppe herausbewegt werden, insbesondere bei einer zu hohen Impulskraft, was zu Produktionsstörungen führen kann.

Die Aufgabe der Erfindung besteht insbesondere darin, eine gattungsgemäße Produkthandhabungsvorrichtung, ein gattungsgemäßes Verfahren und eine gattungsgemäße Verpackungsmaschine mit verbesserten Eigenschaften hinsichtlich einer schonenden Produkthandhabung, einer Produktionsleistung, einer Produktionszuverlässigkeit und/oder einer Genauigkeit einer Längenmessung von Produktgruppen bereitzustellen. Die Aufgabe wird erfindungsgemäß durch die Merkmale des Anspruchs 1 bzw. 7 bzw. 10 gelöst, während vorteilhafte Ausgestaltungen und Weiterbildungen der Erfindung den Unteransprüchen entnommen werden können.

### Offenbarung der Erfindung

Die Erfindung geht aus von einer Produkthandhabungsvorrichtung für eine Verpackungsmaschine, mit zumindest einer Transporteinheit zu einem Transport von Produkten entlang einer Transportrichtung der Transporteinheit und mit zumindest einer Komprimierungseinheit zu einem Komprimieren von einzelnen Produktgruppen, insbesondere quer zur Transportrichtung ausgerichteter Produktreihen, der mittels der Transporteinheit transportierten Produkte, wobei die Komprimierungseinheit zumindest ein, insbesondere translatorisch, beweglich gelagertes Komprimierelement, insbesondere zumindest einen Stößel, aufweist.

Es wird vorgeschlagen, dass das Komprimierelement, insbesondere zumindest temporär, zusammen, vorzugsweise synchron, mit zumindest einem Transportelement der Transporteinheit, an dem die Produkte anordenbar sind, entlang der Transportrichtung bewegbar ist. Durch die erfindungsgemäße Ausgestaltung der Produkthandhabungsvorrichtung kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann. Es kann vorteilhaft durch die erfindungsgemäße Ausgestaltung der Produkthandhabungsvorrichtung ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Dies kann sich insbesondere positiv auf eine Produkthandhabung sowie auf eine Genauigkeit einer Längenmessung von Produktgruppen auswirken. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden. Vorteilhaft kann durch die erfindungsgemäße Ausgestaltung der Produkthandhabungsvorrichtung konstruktiv einfach ein Komprimieren mit einer sich kontinuierlich erhöhenden Komprimierkraft realisiert werden. Es kann vorteilhaft ein geräuscharmes Komprimieren der Produktgruppen realisiert werden, da ein Komprimieren nicht wie im Stand der Technik schlagartig zu einem Zeitpunkt erfolgt, sondern vorteilhaft kontinuierlich über einen gewissen Zeitraum erfolgen kann.

Die Produkthandhabungsvorrichtung ist vorzugsweise ein Teil einer Verpackungsmaschine zu einem Verpacken von Produkten, insbesondere Lebensmitteln, vorzugsweise von Süßwaren, wie beispielsweise Schokotaler, Waffeln, Kekse o. dgl. Bevorzugt ist die Produkthandhabungsvorrichtung zu einem Handhaben, wie beispielsweise zu einem Transportieren, zu einem Ausrichten, zu einem Sortieren, zu einem Komprimieren o.dgl., von Produkten vorgesehen. Die Transporteinheit ist vorzugsweise als Stabfördereinheit, insbesondere als Querstabfördereinheit, ausgebildet. Es ist jedoch auch denkbar, dass die Transporteinheit eine andere, einem Fachmann als sinnvoll erscheinende Ausgestaltung aufweist, wie beispielsweise eine Ausgestaltung als Kettenförderer, als Förderband, als Riemenförderer, als elektrodynamisches Linear- oder Planartransportsystem, dessen Funktionsweise und Aufbau beispielsweise einem Fachmann unter den Produktbezeichnungen XTS^{®} oder XPlanar^{®} der Firma Beckhoff Automation GmbH & Co. KG bereits bekannt ist, o. dgl. Die Transportrichtung verläuft vorzugsweise zumindest im Wesentlichen parallel zu einer Horizontalebene. Vorzugsweise verläuft die Transportrichtung zumindest im Wesentlichen parallel zu einer Längsachse der Transporteinheit. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise umfasst die Transporteinheit zumindest ein Transportelement, das bevorzugt als Stabband, vorzugsweise als Querstabband, ausgebildet ist. Bevorzugt ist das Transportelement als umlaufendes Stabband ausgebildet. Das Transportelement ist vorzugsweise an einer Führungseinheit, insbesondere an einem Rahmen, der Transporteinheit beweglich, insbesondere umlaufend, gelagert. Die Transporteinheit umfasst bevorzugt zumindest eine Antriebseinheit zu einer Bewegung, insbesondere zu einem umlaufenden Antrieb, des Transportelements relativ zum Rahmen der Transporteinheit. Die Antriebseinheit der Transporteinheit umfasst vorzugsweise zumindest einen Elektromotor. Insbesondere ist der Elektromotor der Antriebseinheit der Transporteinheit zu einem rotierenden Antrieb eines Antriebselements, insbesondere eines Antriebsritzels, einer Antriebsrolle o.dgl., der Antriebseinheit der Transporteinheit vorgesehen, das auf eine, einem Fachmann bereits bekannte Art und Weise zu einem Übertragen einer Antriebskraft auf das Transportelement vorgesehen ist. Unter "vorgesehen" soll insbesondere speziell programmiert, speziell eingerichtet, speziell ausgelegt und/oder speziell ausgestattet verstanden werden. Darunter, dass ein Objekt oder eine Einheit zu einer bestimmten Funktion vorgesehen ist, soll insbesondere verstanden werden, dass das Objekt oder die Einheit diese bestimmte Funktion in zumindest einem Anwendungs- und/oder Betriebszustand erfüllt und/oder ausführt. Der Elektromotor der Antriebseinheit der Transporteinheit kann direkt mit dem Antriebselement verbunden sein oder indirekt über beispielsweise ein Getriebe, einen Riementrieb, eine Kette, ein Zahnrad o. dgl. mit dem Antriebselement verbunden sein. Die Antriebseinheit der Transporteinheit kann alternativ oder zusätzlich weitere, einem Fachmann als sinnvoll erscheinende Bauteile aufweisen, die zu einem Antrieb des Transportelements vorgesehen sind, oder die Antriebseinheit der Transporteinheit kann eine andere, einem Fachmann als sinnvoll erscheinende Ausgestaltung aufweisen. Die Transporteinheit ist bevorzugt dazu vorgesehen, die Produkte derart entlang der Transportrichtung zu transportieren, dass die Produkte quer, insbesondere zumindest im Wesentlichen senkrecht, zur Transportrichtung in Reihen ausgerichtet sind, insbesondere infolge einer Anordnung von einzelnen Produktgruppen der Produkte zwischen jeweils zwei Querstäben der Transporteinheit. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Komprimierungseinheit ist vorzugsweise zu einem Komprimieren von den einzelnen zwischen zwei Querstäben angeordneten Produktgruppen, insbesondere quer zur Transportrichtung ausgerichteter Produktreihen, der mittels der Transporteinheit transportierten Produkte vorgesehen. Bevorzugt sind einzelne Produkte der einzelnen Produktgruppen mittels der Komprimierungseinheit entlang einer quer zur Transportrichtung, insbesondere zumindest im Wesentlichen senkrecht zur Transportrichtung und zumindest im Wesentlichen parallel zur Horizontalebene, verlaufenden Richtung aufeinander zu bewegbar, vorzugweise bis die Produkte der einzelnen Produktgruppen aneinander anliegen. Die Komprimierungseinheit umfasst bevorzugt zu einer Einwirkung, insbesondere zu einer Krafteinwirkung entlang der quer zur Transportrichtung verlaufenden Richtung, auf die Produkte der einzelnen Produktgruppen zumindest das, insbesondere translatorisch, beweglich gelagerte Komprimierelement. Das Komprimierelement ist vorzugsweise zu einer Einwirkung auf die Produkte der einzelnen Produktgruppen zumindest entlang der quer zur Transportrichtung, insbesondere zumindest im Wesentlichen senkrecht zur Transportrichtung und zumindest im Wesentlichen parallel zur Horizontalebene, verlaufenden Richtung translatorisch relativ zur Transporteinheit beweglich gelagert. Es ist jedoch auch denkbar, dass das Komprimierelement, insbesondere zumindest zu einer Einwirkung auf die Produkte der einzelnen Produktgruppen, alternativ oder zusätzlich auf eine andere Art und Weise und entlang einer anderen, einem Fachmann als sinnvoll erscheinenden Richtung relativ zur Transporteinheit beweglich gelagert ist. Das Komprimierelement ist vorzugsweise als Stößel ausgebildet. Es ist jedoch auch denkbar, dass das Komprimierelement eine andere, einem Fachmann als sinnvoll erscheinenden Ausgestaltung aufweist, wie beispielsweise eine Ausgestaltung als Schieber, als Stange, als Rechen o. dgl. Vorzugsweise umfasst die Komprimierungseinheit eine Vielzahl an Komprimierelementen, wobei die einzelnen Komprimierelemente jeweils zu einer Einwirkung, insbesondere zu einer Krafteinwirkung entlang der quer zur Transportrichtung verlaufenden Richtung, auf die Produkte der einzelnen Produktgruppen vorgesehen sind. Die Komprimierelemente weisen bevorzugt eine identische Ausgestaltung auf. Es ist jedoch auch denkbar, dass die Komprimierelemente unterschiedliche Ausgestaltungen aufweisen.

Das Komprimierelement ist, insbesondere zumindest temporär, zusammen, vorzugsweise synchron, mit dem Transportelement der Transporteinheit, an dem die Produkte anordenbar sind, entlang der Transportrichtung bewegbar. Die Komprimierungseinheit umfasst bevorzugt zumindest eine Antriebseinheit zu einer Bewegung des Komprimierelements/der Komprimierelemente entlang der Transportrichtung relativ zum Rahmen der Transporteinheit. Die Antriebseinheit der Komprimierungseinheit ist vorzugsweise dazu vorgesehen, das Komprimierelement/die Komprimierelemente umlaufend auf oder mit einer Führungs- und/oder Antriebsbahn, die seitlich versetzt relativ zum Transportelement und/oder relativ zum Rahmen der Transporteinheit, angeordnet ist, zu bewegen, insbesondere um das Komprimierelement/die Komprimierelemente zumindest temporär, zusammen, vorzugsweise synchron, mit dem Transportelement der Transporteinheit, an dem die Produkte anordenbar sind, entlang der Transportrichtung zu bewegen. Eine maximale Erstreckung der Führungs- und/oder Antriebsbahn entlang einer zumindest im Wesentlichen parallel zur Transportrichtung verlaufenden Richtung ist vorzugsweise geringer als eine maximale Erstreckung des Transportelements und/oder der Transporteinheit entlang der zumindest im Wesentlichen parallel zur Transportrichtung verlaufenden Richtung. Die Antriebseinheit der Komprimierungseinheit umfasst vorzugsweise zumindest einen Elektromotor. Insbesondere ist der Elektromotor der Antriebseinheit der Komprimierungseinheit zu einem rotierenden Antrieb eines Antriebselements, insbesondere einer Antriebsrolle o.dgl., der Antriebseinheit der Komprimierungseinheit vorgesehen, das auf eine, einem Fachmann bereits bekannte Art und Weise zu einem Übertragen einer Antriebskraft, insbesondere auf einen Antriebsriemen der Antriebseinheit der Komprimierungseinheit, zu einer Bewegung des Komprimierelements/der Komprimierelemente entlang der Transportrichtung vorgesehen ist. Die Antriebseinheit der Komprimierungseinheit ist bevorzugt als Riementrieb ausgebildet, der einen Zahnriemen umfasst, an dem das Komprimierelement/die Komprimierelemente angeordnet ist/sind, oder als Kettentrieb ausgebildet, der eine Antriebskette umfasst, an dem das Komprimierelement/die Komprimierelemente angeordnet ist/sind. Die Antriebseinheit der Komprimierungseinheit kann alternativ oder zusätzlich weitere, einem Fachmann als sinnvoll erscheinende Bauteile aufweisen, die zu einem Antrieb des Komprimierelements/der Komprimierelemente entlang der Transportrichtung vorgesehen sind, oder die Antriebseinheit der Komprimierungseinheit kann eine andere, einem Fachmann als sinnvoll erscheinende Ausgestaltung aufweisen, wie beispielsweise eine Ausgestaltung als elektrodynamisches Linear- oder Planartransportsystem, dessen Funktionsweise und Aufbau beispielsweise einem Fachmann unter den Produktbezeichnungen XTS^{®} oder XPlanar^{®} der Firma Beckhoff Automation GmbH & Co. KG bereits bekannt ist. Bei einer Ausgestaltung der Antriebseinheit der Komprimierungseinheit als elektrodynamisches Linear- oder Planartransportsystem umfasst die Antriebseinheit der Komprimierungseinheit bevorzugt eine Vielzahl, insbesondere horizontal oder vertikal ausgerichteter, Bewegungsflächenelemente, die mit elektromagnetischen Antriebselementen ausgestattet sind und miteinander verbunden sind, insbesondere um zusammen eine planare Bewegungsebene oder eine Statorbahn zu bilden. Das elektrodynamische Linear- oder Planartransportsystem umfasst vorzugsweise eine Vielzahl an elektrodynamisch beweglichen Movern, die relativ zu den Bewegungsflächenelementen, insbesondere kontaktlos, beweglich sind, insbesondere infolge eines Zusammenwirkens von Permanentmagneten der elektrodynamisch beweglichen Mover mit den elektromagnetischen Antriebselementen der Bewegungsflächenelemente, wobei an jedem elektrodynamisch beweglichen Mover zumindest ein Komprimierelement angeordnet ist, insbesondere daran beweglich gelagert ist, um eine Bewegung des Komprimierelements relativ zum elektrodynamisch beweglichen Mover zu realisieren. Denkbar ist auch, dass das Komprimierelement/die Komprimierelemente mittels der Antriebseinheit der Transporteinheit entlang der Transportrichtung antreibbar sind, wie beispielsweise infolge einer Wirkverbindung der Antriebseinheit der Transporteinheit mit dem Komprimierelement/den Komprimierelementen oder mittels einer Wirkverbindung des Transportelements mit dem Komprimierelement/den Komprimierelementen o. dgl.

Des Weiteren wird vorgeschlagen, dass das Komprimierelement, insbesondere alle Komprimierelemente, vorzugsweise jeweils, entlang zweier quer, insbesondere zumindest im Wesentlichen senkrecht, zueinander verlaufender Richtungen beweglich relativ zur Transporteinheit gelagert ist. Bevorzugt weist das Komprimierelement, insbesondere alle Komprimierelemente jeweils, eine Linearbewegungsachse auf, die sich zumindest im Wesentlichen senkrecht zur Transportrichtung erstreckt, insbesondere betrachtet in einer sich zumindest im Wesentlichen parallel zur Horizontalebene erstreckenden Ebene. Eine Bewegung des Komprimierelements/der Komprimierelemente entlang der jeweiligen Linearbewegungsachse ist vorzugsweise zu einer Realisierung einer Komprimierbewegung des Komprimierelements/der Komprimierelemente zu einem Komprimieren von einzelnen Produktgruppen, insbesondere quer zur Transportrichtung ausgerichteter Produktreihen, der mittels der Transporteinheit transportierten Produkte vorgesehen. Vorzugsweise verlaufen die zwei quer, insbesondere zumindest im Wesentlichen senkrecht, zueinander verlaufenden Richtungen zumindest im Wesentlichen parallel zur Horizontalebene. Vorzugsweise verläuft eine der zwei quer, insbesondere zumindest im Wesentlichen senkrecht, zueinander verlaufenden Richtungen zumindest im Wesentlichen parallel zur Transportrichtung und die andere der zwei quer, insbesondere zumindest im Wesentlichen senkrecht, zueinander verlaufenden Richtungen verläuft bevorzugt zumindest im Wesentlichen senkrecht zur Transportrichtung, insbesondere betrachtet in einer sich zumindest im Wesentlichen parallel zur Horizontalebene erstreckenden Ebene. Vorzugsweise ist das Komprimierelement, insbesondere sind alle Komprimierelemente zusammen, mittels der Antriebseinheit der Komprimierungseinheit, insbesondere mittels des als Riemen, vorzugsweise als Zahnriemen, ausgebildeten Antriebselements, zumindest im Wesentlichen parallel zur Transportrichtung relativ zur Transporteinheit bewegbar. Bevorzugt ist das Komprimierelement, insbesondere sind alle Komprimierelemente unabhängig voneinander vorzugsweise individuell, entlang der einen der zwei quer, insbesondere zumindest im Wesentlichen senkrecht, zueinander verlaufenden Richtungen, die bevorzugt zumindest im Wesentlichen senkrecht zur Transportrichtung verläuft, relativ zur Transporteinheit bewegbar, insbesondere in Abhängigkeit von einer Position des Komprimierelements/der Komprimierelemente relativ zum Transportelement entlang der Transportrichtung. Das Komprimierelement/die Komprimierelemente ist/sind vorzugsweise translatorisch entlang der einen der zwei quer, insbesondere zumindest im Wesentlichen senkrecht, zueinander verlaufenden Richtungen, die bevorzugt zumindest im Wesentlichen senkrecht zur Transportrichtung verläuft, relativ zur Transporteinheit bewegbar, insbesondere in Abhängigkeit von einer Position des Komprimierelements/der Komprimierelemente relativ zum Transportelement entlang der Transportrichtung. Die Komprimierungseinheit umfasst vorzugsweise zumindest ein, insbesondere fest mit dem als Riemen, vorzugsweise als Zahnriemen, ausgebildeten Antriebselement verbundenes, Lagerelement, an, insbesondere in, dem das Komprimierelement, vorzugsweise translatorisch, beweglich gelagert ist, insbesondere entlang der einen der zwei quer, insbesondere zumindest im Wesentlichen senkrecht, zueinander verlaufenden Richtungen, die bevorzugt zumindest im Wesentlichen senkrecht zur Transportrichtung verläuft. Bevorzugt umfasst die Komprimierungseinheit eine Vielzahl an Lagerelementen, wobei vorzugsweise pro Komprimierelement ein Lagerelement vorgesehen ist, insbesondere um vorzugsweise eine individuelle translatorische bewegliche Lagerung jedes einzelnen Komprimierelements zu realisieren. Es ist jedoch auch denkbar, dass mehrere Komprimierelemente an einem einzelnen Lagerelement beweglich gelagert sind. Durch die erfindungsgemäße Ausgestaltung der Produkthandhabungsvorrichtung kann vorteilhaft ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden. Vorteilhaft kann durch die erfindungsgemäße Ausgestaltung der Produkthandhabungsvorrichtung konstruktiv einfach ein Komprimieren mit einer sich kontinuierlich erhöhenden Komprimierkraft realisiert werden. Es kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann.

Ferner wird vorgeschlagen, dass die Komprimierungseinheit zumindest eine, insbesondere umlaufende, vorzugsweise endlose, bevorzugt die bereits zuvor genannte, Führungs- und/oder Antriebsbahn umfasst, mittels der eine Bewegung des Komprimierelements, insbesondere aller Komprimierelemente, entlang der Transportrichtung führbar und/oder hervorrufbar ist, wobei sich die Führungs- und/oder Antriebsbahn größtenteils, insbesondere vollständig, zumindest im Wesentlichen parallel zur Transportrichtung erstreckt. Die Führungs- und/oder Antriebsbahn kann durch die Antriebseinheit der Komprimierungseinheit, insbesondere des als Riemen, vorzugsweise als Zahnriemen, ausgebildeten Antriebselements, definiert oder gebildet sein. Bevorzugt ist/sind das/die Lagerelement/e, das/die fest mit dem als Riemen, vorzugsweise als Zahnriemen, ausgebildeten Antriebselement verbunden ist/sind, entlang der Führungs- und/oder Antriebsbahn bewegbar, insbesondere umlaufend um eine Gehäuse- und/oder Führungseinheit der Komprimierungseinheit. Weitere, einem Fachmann als sinnvoll erscheinende Ausgestaltungen der Führungs- und/oder Antriebsbahn sind ebenfalls denkbar, wie beispielsweise eine Ausgestaltung der Führungs- und/oder Antriebsbahn durch eine Statorbahn einer als elektrodynamisches Lineartransportsystem ausgebildeten Antriebseinheit der Komprimierungseinheit. Bei einer Ausgestaltung der Führungs- und/oder Antriebsbahn durch eine Statorbahn einer als elektrodynamisches Lineartransportsystem ausgebildeten Antriebseinheit der Komprimierungseinheit ist das Komprimierelement vorzugsweise an einem individuell geschwindigkeits- und/oder positionsregelbaren elektrodynamischen Mover des elektrodynamischen Lineartransportsystems angeordnet. Durch die erfindungsgemäße Ausgestaltung der Produkthandhabungsvorrichtung kann vorteilhaft ein sicheres, insbesondere vorteilhaft synchrones, Mitbewegen des Komprimierelements mit den Produktgruppen entlang der Transportrichtung erreicht werden. Es kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann. Es kann vorteilhaft durch die erfindungsgemäße Ausgestaltung der Produkthandhabungsvorrichtung ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Dies kann sich insbesondere positiv auf eine Produkthandhabung sowie auf eine Genauigkeit einer Längenmessung von Produktgruppen auswirken. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden.

Zudem wird vorgeschlagen, dass die Komprimierungseinheit zumindest ein Bewegungselement, insbesondere Steuerkurve, umfasst, mittels dem das Komprimierelement, insbesondere infolge einer Bewegung des Komprimierelements entlang der Transportrichtung, quer, insbesondere zumindest im Wesentlichen senkrecht, zur Transportrichtung relativ zur Transporteinheit, insbesondere translatorisch, beweglich ist. Das Bewegungselement kann durch eine Führungsnut oder einen Führungssteg der Komprimierungseinheit definiert oder gebildet sein, in die ein Führungsfortsatz des Komprimierelements/der Komprimierelemente eingreift oder der in eine Führungsnut des Komprimierelements/der Komprimierelemente eingreift. Es ist denkbar, dass sich das, insbesondere als Steuerkurve ausgebildete, Bewegungselement bis auf einen Abschnitt, insbesondere bis auf einen Steuerkurvenabschnitt, des Bewegungselements, mittels dem eine Bewegung des Komprimierelements/der Komprimierelemente entlang der quer, insbesondere zumindest im Wesentlichen senkrecht, zur Transportrichtung verlaufenden Richtungen relativ zur Transporteinheit hervorrufbar ist, zumindest im Wesentlichen parallel zur Transportrichtung erstreckt, dass das, insbesondere als Steuerkurve ausgebildete, Bewegungselement lediglich in einem Bereich der Führungs- und/oder Antriebsbahn angeordnet ist, in dem eine Bewegung des Komprimierelements/der Komprimierelemente entlang der quer, insbesondere zumindest im Wesentlichen senkrecht, zur Transportrichtung verlaufenden Richtungen relativ zur Transporteinheit für ein Komprimieren der Produktgruppen genutzt wird oder dass das Bewegungselement eine andere, einem Fachmann als sinnvoll erscheinende Ausgestaltung und/oder Anordnung umfasst, wie beispielsweise ein separater elektrischer Antriebsmotor für das Komprimierelement, ein auf das Komprimierelement einwirkender Hydraulik- oder Pneumatikzylinder o. dgl. Bei einer Ausgestaltung der Antriebseinheit der Komprimierungseinheit als elektrodynamisches Lineartransportsystem ist es beispielsweise denkbar, dass das Komprimierelement vorzugsweise beweglich an einem individuell geschwindigkeits- und/oder positionsregelbaren elektrodynamischen Mover des elektrodynamischen Lineartransportsystems gelagert ist, wobei eine Bewegung des Komprimierelements relativ zum elektrodynamischen Mover zu einem Komprimieren von einzelnen Produktgruppen infolge eines Zusammenwirkens mit der Steuerkurve, infolge eines Eigenantriebs des Komprimierelements, infolge einer Relativbewegung von zwei elektrodynamischen Movern oder auf eine andere, einem Fachmann als sinnvoll erscheinenden Art und Weise hervorrufbar ist. Durch die erfindungsgemäße Ausgestaltung der Produkthandhabungsvorrichtung kann konstruktiv einfach eine Bewegung des Komprimierelements zu einem Komprimieren von Produktgruppen hervorgerufen werden. Es kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann. Vorteilhaft kann durch die erfindungsgemäße Ausgestaltung der Produkthandhabungsvorrichtung konstruktiv einfach ein Komprimieren mit einer sich kontinuierlich erhöhenden Komprimierkraft realisiert werden.

Es wird weiter vorgeschlagen, dass die Komprimierungseinheit zumindest ein Dämpfungselement, insbesondere Feder, umfasst, das zu einer Krafteinwirkung auf das Komprimierelement vorgesehen ist, insbesondere um eine Krafteinwirkung des Komprimierelements auf die Produktgruppe, insbesondere entlang der quer zur Transportrichtung verlaufenden Richtung, zu dämpfen. Das Komprimierelement ist mittels des Dämpfungselements vorzugsweise federbelastet beweglich gelagert. Bevorzugt ist das Dämpfungselement, insbesondere die Feder, zu einer Krafteinwirkung auf das Komprimierelement in eine auf die Transporteinheit hin zugewandte Richtung vorgesehen, insbesondere um eine Krafteinwirkung des Komprimierelements auf die Produktgruppe, insbesondere entlang der quer zur Transportrichtung verlaufenden Richtung, zu dämpfen. Es ist jedoch auch denkbar, dass das Dämpfungselement, insbesondere die Feder, zu einer Krafteinwirkung auf das Komprimierelement in eine von der Transporteinheit abgewandte Richtung vorgesehen ist, insbesondere um eine Krafteinwirkung des Komprimierelements auf die Produktgruppe, insbesondere entlang der quer zur Transportrichtung verlaufenden Richtung, zu dämpfen. Das Dämpfungselement ist vorzugsweise als Feder, insbesondere Spiralfeder, Tellerfeder o. dgl., ausgebildet. Es ist jedoch auch denkbar, dass das Dämpfungselement eine andere, einem Fachmann als sinnvoll erscheinende Ausgestaltung aufweist, wie beispielsweise eine Ausgestaltung als Elastomerdämpfer, als Gasdruckfeder o. dgl. Das Dämpfungselement stützt sich bevorzugt mit einer Seite an dem Komprimierelement ab und mit einer weiteren Seite stützt sich das Dämpfungselement vorzugsweise an dem Lagerelement ab. Es ist jedoch auch denkbar, dass das Dämpfungselement auf eine andere, einem Fachmann als sinnvoll erscheinende Weise mit dem Komprimierelement zusammenwirkt, um eine Krafteinwirkung des Komprimierelements auf die Produktgruppe, insbesondere entlang der quer zur Transportrichtung verlaufenden Richtung, zu dämpfen. Durch die erfindungsgemäße Ausgestaltung der Produkthandhabungsvorrichtung kann vorteilhaft einer Beschädigung von einzelnen Produkten in Produktgruppen während eines Komprimierens entgegengewirkt werden. Es kann vorteilhaft einem ungewollten Maschinenstopp entgegengewirkt werden, da einem ungewollten Maschinenstopp durch Bruchstücke von Produkten entgegengewirkt werden kann. Es kann eine vorteilhafte Krafteinwirkung auf Produktgruppen ermöglicht werden, was zu einem schonenden Komprimieren und einer zuverlässigen Längenmessung beitragen kann. Es kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann.

Ferner wird vorgeschlagen, dass die Produkthandhabungsvorrichtung zumindest eine Erfassungseinheit zu einem Erfassen einer maximalen Erstreckung, insbesondere einer sich quer zur Transportrichtung erstreckenden maximalen Länge, der Produktgruppe umfasst, wobei die Erfassungseinheit zumindest ein Erfassungselement, insbesondere Distanzsensor, aufweist, das zu einem Erfassen der maximalen Erstreckung mit dem Komprimierelement zusammenwirkt. Es ist denkbar, dass die Produkthandhabungsvorrichtung zur Lösung der oben genannten Aufgabe in einer alternativen Ausgestaltung unabhängig von der Bewegung des Komprimierelements zusammen mit dem Transportelement ausgebildet ist. Vorzugsweise umfasst die Produkthandhabungsvorrichtung in der alternativen Ausgestaltung, insbesondere in der unabhängig von der Bewegung des Komprimierelements zusammen mit dem Transportelement ausgebildeten Ausgestaltung, zumindest eine Transporteinheit zu einem Transport von Produkten entlang einer Transportrichtung der Transporteinheit und zumindest eine Komprimierungseinheit zu einem Komprimieren von einzelnen Produktgruppen, insbesondere quer zur Transportrichtung ausgerichteter Produktreihen, der mittels der Transporteinheit transportierten Produkte, wobei die Komprimierungseinheit zumindest ein, insbesondere translatorisch, beweglich gelagertes Komprimierelement, insbesondere Stößel, aufweist, wobei die Produkthandhabungsvorrichtung zumindest eine Erfassungseinheit zu einem Erfassen einer maximalen Erstreckung, insbesondere einer sich quer zur Transportrichtung erstreckenden maximalen Länge, der Produktgruppe umfasst, wobei die Erfassungseinheit zumindest ein Erfassungselement, insbesondere Distanzsensor, aufweist, das zu einem Erfassen der maximalen Erstreckung mit dem Komprimierelement zusammenwirkt. Die Erfassungseinheit ist bevorzugt als elektronische, vorzugsweise optoelektronische, Erfassungseinheit, wie beispielsweise als Laserdistanzerfassungseinheit o. dgl., ausgebildet. Das Erfassungselement ist vorzugsweise an einer dem Komprimierelement/der Komprimierelemente gegenüberliegenden Seite der Transporteinheit angeordnet. Vorzugsweise ist das Erfassungselement dazu vorgesehen, ein Messsignal, insbesondere ein Laserimpuls, in Richtung des Komprimierelements auszusenden. Bevorzugt ist die Erfassungseinheit dazu vorgesehen, infolge einer Reflektion des ausgesandten Messsignals an einer dem Erfassungselement zugewandten Oberfläche des Komprimierelements, das an einem dem Erfassungselement abgewandten Ende einer komprimierten Produktgruppe an der Produktgruppe anliegt, eine Distanz zwischen dem Erfassungselement und dem Komprimierelement zu erfassen, die einer maximalen Länge der Produktgruppe entspricht. Es ist jedoch auch denkbar, dass die Erfassungseinheit eine andere, einem Fachmann als sinnvoll erscheinende Ausgestaltung und/oder Funktionsweise zu einer Erfassung einer maximalen Länge von komprimierten Produktgruppen aufweist. Durch die erfindungsgemäße Ausgestaltung der Produkthandhabungsvorrichtung kann vorteilhaft eine zuverlässige Erfassung einer maximalen Länge einer komprimierten Produktgruppe realisiert werden. Es kann vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden.

Zudem geht die Erfindung aus von einem Verfahren zu einem Komprimieren von einzelnen Produktgruppen von transportierten Produkten mittels einer Produkthandhabungsvorrichtung, insbesondere mittels einer erfindungsgemäßen Produkthandhabungsvorrichtung. Es wird vorgeschlagen, dass in zumindest einem Verfahrensschritt das Komprimierelement, insbesondere zumindest temporär, zusammen, vorzugsweise synchron, mit dem Transportelement der Transporteinheit, an dem die Produkte anordenbar sind, entlang der Transportrichtung bewegt wird. Das Komprimierelement/die Komprimierelemente wird/werden vorzugsweise auf oder mit der Führungs- und/oder Antriebsbahn umlaufend relativ zum Transportelement und/oder relativ zum Rahmen der Transporteinheit bewegt. Das Komprimierelement/die Komprimierelemente wird/werden vorzugsweise auf oder mit der Führungs- und/oder Antriebsbahn temporär synchron mit dem Transportelement der Transporteinheit, an dem die Produkte anordenbar sind, entlang der Transportrichtung bewegt, insbesondere während eines Komprimiervorgangs. Bevorzugt werden das Komprimierelement/die Komprimierelemente temporär auf oder mit der Führungs- und/oder Antriebsbahn entgegen der Transportrichtung bewegt, insbesondere nach einem Abschluss des Komprimiervorgangs. Durch die erfindungsgemäße Ausgestaltung kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann. Es kann vorteilhaft durch die erfindungsgemäße Ausgestaltung ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Dies kann sich insbesondere positiv auf eine Produkthandhabung sowie auf eine Genauigkeit einer Längenmessung von Produktgruppen auswirken. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden. Vorteilhaft kann durch die erfindungsgemäße Ausgestaltung konstruktiv einfach ein Komprimieren mit einer sich kontinuierlich erhöhenden Komprimierkraft realisiert werden. Es kann vorteilhaft ein geräuscharmes Komprimieren der Produktgruppen realisiert werden, da ein Komprimieren nicht wie im Stand der Technik schlagartig zu einem Zeitpunkt erfolgt, sondern vorteilhaft kontinuierlich über einen gewissen Zeitraum erfolgen kann.

Des Weiteren wird vorgeschlagen, dass in zumindest einem Verfahrensschritt eine Bewegung des Komprimierelements entlang der Transportrichtung von einer Bewegung des Komprimierelements entlang einer quer, insbesondere zumindest im Wesentlichen senkrecht, zur Transportrichtung verlaufenden Richtung überlagert wird. Vorzugsweise wird das Komprimierelement/die Komprimierelemente durch ein Einwirken des Bewegungselements auf das Komprimierelement/die Komprimierelemente entlang der quer, insbesondere zumindest im Wesentlichen senkrecht, zur Transportrichtung verlaufenden Richtung in Richtung der einzelnen Produktgruppen von transportierten Produkten bewegt, insbesondere um ein Komprimieren der Produktgruppen zu realisieren. Durch die erfindungsgemäße Ausgestaltung kann vorteilhaft ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Dies kann sich insbesondere positiv auf eine Produkthandhabung sowie auf eine Genauigkeit einer Längenmessung von Produktgruppen auswirken. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden.

Ferner wird vorgeschlagen, dass in zumindest einem Verfahrensschritt ein Abstand zwischen dem Komprimierelement und einem Erfassungselement einer Erfassungseinheit der Produkthandhabungsvorrichtung erfasst wird, insbesondere um eine maximale Erstreckung, insbesondere eine sich quer zur Transportrichtung erstreckende maximale Länge, der Produktgruppe zu ermitteln. Es ist denkbar, dass das Verfahren zur Lösung der oben genannten Aufgabe in einer alternativen Ausgestaltung unabhängig von der Bewegung des Komprimierelements zusammen mit dem Transportelement ausgebildet ist. Vorzugsweise ist das Verfahren in der alternativen Ausgestaltung, insbesondere in der unabhängig von der Bewegung des Komprimierelements zusammen mit dem Transportelement ausgebildeten Ausgestaltung, zu einem Komprimieren von einzelnen Produktgruppen von transportierten Produkten mittels einer Produkthandhabungsvorrichtung, insbesondere mittels einer erfindungsgemäßen Produkthandhabungsvorrichtung vorgesehen, wobei in zumindest einem Verfahrensschritt ein Abstand zwischen dem Komprimierelement und einem Erfassungselement einer Erfassungseinheit der Produkthandhabungsvorrichtung erfasst wird, insbesondere um eine maximale Erstreckung, insbesondere eine sich quer zur Transportrichtung erstreckende maximale Länge, der Produktgruppe zu ermitteln. Durch die erfindungsgemäße Ausgestaltung kann vorteilhaft eine zuverlässige Erfassung einer maximalen Länge einer komprimierten Produktgruppe realisiert werden. Es kann vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden.

Des Weiteren wird eine Verpackungsmaschine zu einem Verpacken von Produkten, insbesondere Lebensmitteln, mit zumindest einer erfindungsgemäßen Produkthandhabungsvorrichtung vorgeschlagen. Die Verpackungsmaschine kann weitere, einem Fachmann als sinnvoll erscheinende Vorrichtungen und/oder Einheiten umfassen, die zu einer Handhabung von Produkten, insbesondere von Lebensmitteln, nutzbar sind. Die Verpackungsmaschine ist vorzugsweise zu einer Herstellung, Abfüllung, Verpackung und/oder Umverpackung von Lebensmitteln vorgesehen. Die Verpackungsmaschine kann zusätzlich zur Produkthandhabungsvorrichtung beispielsweise eine Umformvorrichtung für Verpackungen, eine Schneidvorrichtung, eine Abfüllvorrichtung, eine Sterilisationsvorrichtung, eine Verschlussvorrichtung, eine Umverpackungsvorrichtung, eine Behälterzuführvorrichtung, eine Packvorrichtung o. dgl. umfassen. Durch die erfindungsgemäße Ausgestaltung der Verpackungsmaschine kann vorteilhaft ein mit den Produkten bzw. den Produktgruppen entlang der Transportrichtung mitbewegbares Komprimierelement realisiert werden, so dass vorteilhaft eine schonende Produkthandhabung, eine hohe Produktionsleistung, eine hohe Produktionszuverlässigkeit und/oder eine hohe Genauigkeit einer Längenmessung von Produktgruppen erreicht werden kann. Es kann vorteilhaft durch die erfindungsgemäße Ausgestaltung der Verpackungsmaschine ein produktschonendes Komprimieren von einzelnen Produktgruppen über eine Bewegungsstrecke der Produktgruppen entlang der Transportrichtung realisiert werden, so dass vorteilhaft kein schlagartiges Komprimieren erfolgt, sondern ein langsames und gleichmäßiges Komprimieren der Produktgruppen, während diese noch entlang der Transportrichtung bewegt werden. Dies kann sich insbesondere positiv auf eine Produkthandhabung sowie auf eine Genauigkeit einer Längenmessung von Produktgruppen auswirken. Es kann vorteilhaft in Abhängigkeit von einer Bewegung der Produkte entlang der Transportrichtung eine kontinuierliche Komprimierbewegung des Komprimierelements entlang einer quer zur Transportrichtung verlaufenden Richtung realisiert werden. Vorteilhaft kann durch die erfindungsgemäße Ausgestaltung der Verpackungsmaschine konstruktiv einfach ein Komprimieren mit einer sich kontinuierlich erhöhenden Komprimierkraft realisiert werden. Es kann vorteilhaft ein geräuscharmes Komprimieren der Produktgruppen realisiert werden, da ein Komprimieren nicht wie im Stand der Technik schlagartig zu einem Zeitpunkt erfolgt, sondern vorteilhaft kontinuierlich über einen gewissen Zeitraum erfolgen kann.

Die erfindungsgemäße Produkthandhabungsvorrichtung, das erfindungsgemäße Verfahren und/oder die erfindungsgemäße Verpackungsmaschine sollen/soll hierbei nicht auf die oben beschriebene Anwendung und Ausführungsform beschränkt sein. Insbesondere können/kann die erfindungsgemäße Produkthandhabungsvorrichtung, das erfindungsgemäße Verfahren und/oder die erfindungsgemäße Verpackungsmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Verpackungsmaschine mit einer erfindungsgemäßen Produkthandhabungsvorrichtung in einer schematischen Darstellung,
- Fig. 2: eine Detailansicht der erfindungsgemäßen Produkthandhabungsvorrichtung in einer schematischen Darstellung,
- Fig. 3: eine Detailansicht einer Komprimierungseinheit der erfindungsgemäßen Produkthandhabungsvorrichtung in einer schematischen Darstellung und
- Fig. 4: ein Ablaufdiagramm eines erfindungsgemäßen Verfahrens zu einem Komprimieren von einzelnen Produktgruppen von transportierten Produkten mittels einer Produkthandhabungsvorrichtung in einer schematischen Darstellung.

### Beschreibung des Ausführungsbeispiels

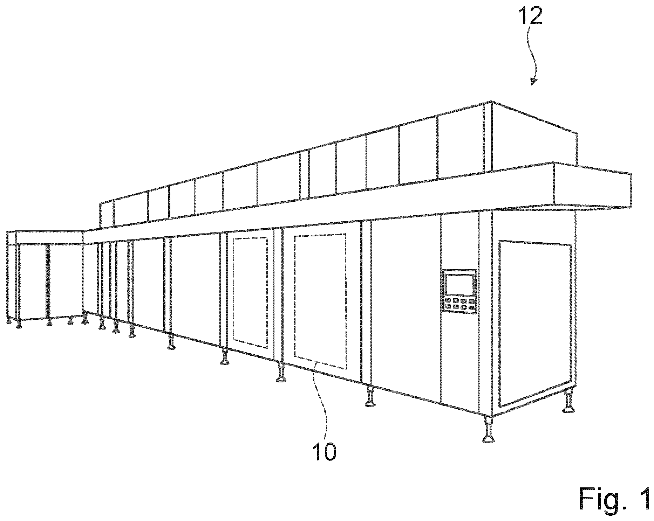

Figur 1 zeigt eine, insbesondere stark vereinfachte, Darstellung einer Verpackungsmaschine 12 zumindest zu einem Verpacken von Produkten 16, insbesondere Lebensmitteln, wie beispielsweise Kekse, Biskuits, Schokoartikel o. dgl. Die Verpackungsmaschine 12 umfasst zumindest eine Produkthandhabungsvorrichtung 10 zu einem Handhaben, wie beispielsweise zu einem Transportieren, zu einem Ausrichten, zu einem Sortieren, zu einem Komprimieren o.dgl., von Produkten 16. Die Verpackungsmaschine 12 ist insbesondere als eine Lebensmittelproduktions- und/oder Lebensmittelverpackungsmaschine ausgebildet. Es ist jedoch auch denkbar, dass die Verpackungsmaschine 12 eine andere, einem Fachmann als sinnvoll erscheinende Ausgestaltung aufweist, wie beispielsweise als eine Pharmazieproduktions- und/oder Pharmazieverpackungsmaschine o. dgl. Die Verpackungsmaschine 12 kann alternativ oder zusätzlich zu einer Herstellung, Verarbeitung und/oder Verpackung von Lebensmitteln, wie beispielsweise Kekse, Biskuits, Schokoartikel o. dgl., vorgesehen sein. Die Verpackungsmaschine 12 umfasst bevorzugt zusätzlich zur Produkthandhabungsvorrichtung 10 weitere, einem Fachmann als sinnvoll erscheinende Vorrichtungen und/oder Einheiten, die zu einer Herstellung, Verarbeitung und/oder Verpackung von Lebensmitteln Verwendung finden, wie beispielsweise eine Sterilisationsvorrichtung, eine Verschlussvorrichtung, eine Umverpackungsvorrichtung, eine Steuer- oder Regeleinheit o. dgl.

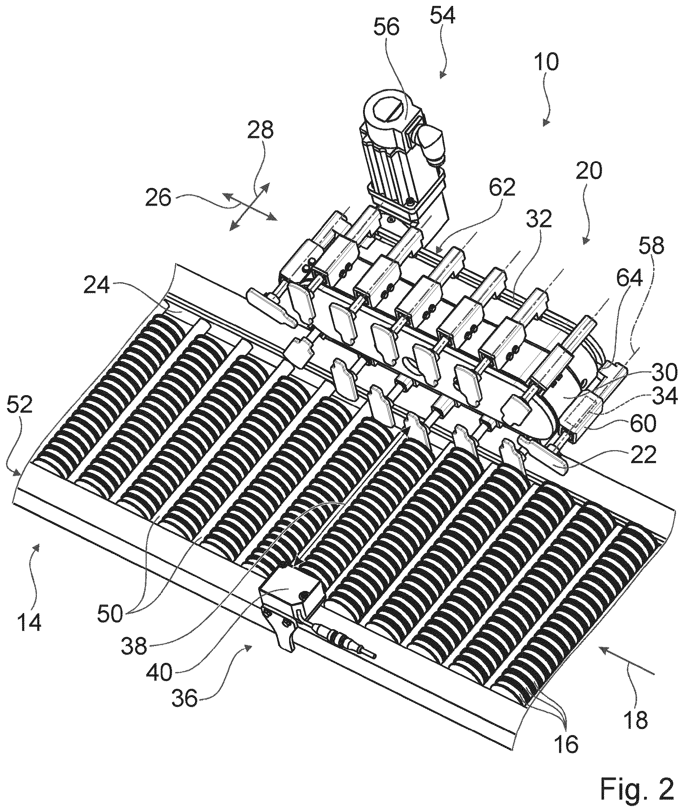

Figur 2 zeigt eine Detailansicht der Produkthandhabungsvorrichtung 10 in einer schematischen Darstellung. Die Produkthandhabungsvorrichtung 10 für die Verpackungsmaschine 12 umfasst zumindest eine Transporteinheit 14 zu einem Transport von Produkten 16 entlang einer Transportrichtung 18 der Transporteinheit 14 und zumindest eine Komprimierungseinheit 20 zu einem Komprimieren von einzelnen Produktgruppen, insbesondere quer zur Transportrichtung 18 ausgerichteter Produktreihen, der mittels der Transporteinheit 14 transportierten Produkte 16, wobei die Komprimierungseinheit 20 zumindest ein, insbesondere translatorisch, beweglich gelagertes Komprimierelement 22, insbesondere einen Stößel, aufweist. Die Transporteinheit 14 ist vorzugsweise als Stabfördereinheit, insbesondere als Querstabfördereinheit, ausgebildet. Es ist jedoch auch denkbar, dass die Transporteinheit 14 eine andere, einem Fachmann als sinnvoll erscheinende Ausgestaltung aufweist, wie beispielsweise eine Ausgestaltung als Kettenförderer, als Förderband, als Riemenförderer, als elektrodynamisches Linear- oder Planartransportsystem, dessen Funktionsweise und Aufbau beispielsweise einem Fachmann unter den Produktbezeichnungen XTS^{®} oder XPlanar^{®} der Firma Beckhoff Automation GmbH & Co. KG bereits bekannt ist, o. dgl.

Vorzugsweise umfasst die Transporteinheit 14 zumindest ein Transportelement 24, das bevorzugt als Stabband, vorzugsweise als Querstabband, ausgebildet ist. Bevorzugt ist das Transportelement 24 als umlaufendes Stabband ausgebildet. Das Transportelement 24 ist vorzugsweise an einer Führungseinheit 52, insbesondere an einem Rahmen, der Transporteinheit 14 beweglich, insbesondere umlaufend, gelagert. Die Transporteinheit 14 umfasst bevorzugt zumindest eine Antriebseinheit (hier nicht näher dargestellt) zu einer Bewegung, insbesondere zu einem umlaufenden Antrieb, des Transportelements 24 relativ zur Führungseinheit 52. Die Transporteinheit 14 ist bevorzugt dazu vorgesehen, die Produkte 16 derart entlang der Transportrichtung 18 zu transportieren, dass die Produkte 16 quer, insbesondere zumindest im Wesentlichen senkrecht, zur Transportrichtung 18 in Reihen ausgerichtet sind, insbesondere infolge einer Anordnung von einzelnen Produktgruppen der Produkte 16 zwischen jeweils zwei Querstäben 50 der Transporteinheit 14, insbesondere des Transportelements 24. Die Transportrichtung 18, entlang derer die Produkte 16, insbesondere in Form von quer zur Transportrichtung 18 ausgerichteter Produktgruppen, vorzugsweise Produktreihen, förderbar sind, verläuft vorzugsweise zumindest im Wesentlichen parallel zu einer Horizontalebene. Vorzugsweise verläuft die Transportrichtung 18 zumindest im Wesentlichen parallel zu einer Längsachse der Transporteinheit 14. Die Produkte 16 können in einem zwischen den zwei Querstäben 50 angeordneten Zustand geringe Abstände entlang einer quer zur Transportrichtung 18 verlaufenden Richtung 28 aufweisen bzw. einzelne Produkte 16 einer Produktgruppe können derart zwischen den zwei Querstäben 50 angeordnet sein, dass nicht alle Produkte 16 der Produktgruppe vollflächig aneinander anliegen, insbesondere bevor die Produkte 16 während eines Transports entlang der Transportrichtung 18 die Komprimierungseinheit 20 passiert haben.

Die Komprimierungseinheit 20 ist vorzugsweise zu einem Komprimieren von den einzelnen zwischen zwei Querstäben 50 angeordneten Produktgruppen, insbesondere quer zur Transportrichtung 18 ausgerichteter Produktreihen, der mittels der Transporteinheit 14 transportierten Produkte 16 vorgesehen. Bevorzugt sind einzelne Produkte 16 der einzelnen Produktgruppen mittels der Komprimierungseinheit 20 entlang der quer zur Transportrichtung 18, insbesondere zumindest im Wesentlichen senkrecht zur Transportrichtung 18 und zumindest im Wesentlichen parallel zur Horizontalebene, verlaufenden Richtung 28 aufeinander zu bewegbar, vorzugweise bis die Produkte 16 der einzelnen Produktgruppen aneinander anliegen. Die Komprimierungseinheit 20 umfasst bevorzugt zu einer Einwirkung, insbesondere zu einer Krafteinwirkung entlang der quer zur Transportrichtung 18 verlaufenden Richtung 28, auf die Produkte 16 der einzelnen Produktgruppen zumindest das, insbesondere translatorisch, beweglich gelagerte Komprimierelement 22. Das Komprimierelement 22 ist vorzugsweise zu einer Einwirkung auf die Produkte 16 der einzelnen Produktgruppen zumindest entlang der quer zur Transportrichtung 18, insbesondere zumindest im Wesentlichen senkrecht zur Transportrichtung 18 und zumindest im Wesentlichen parallel zur Horizontalebene, verlaufenden Richtung 28 translatorisch relativ zur Transporteinheit 14 beweglich gelagert. Es ist jedoch auch denkbar, dass das Komprimierelement 22, insbesondere zumindest zu einer Einwirkung auf die Produkte 16 der einzelnen Produktgruppen, alternativ oder zusätzlich auf eine andere Art und Weise und entlang einer anderen, einem Fachmann als sinnvoll erscheinenden Richtung relativ zur Transporteinheit 14 beweglich gelagert ist. Das Komprimierelement 22 ist vorzugsweise als Stößel ausgebildet. Es ist jedoch auch denkbar, dass das Komprimierelement 22 eine andere, einem Fachmann als sinnvoll erscheinende Ausgestaltung aufweist, wie beispielsweise eine Ausgestaltung als Schieber, als Stange, als Rechen o. dgl. Vorzugsweise umfasst die Komprimierungseinheit 20 eine Vielzahl an Komprimierelementen 22, wobei die einzelnen Komprimierelemente 22 jeweils zu einer Einwirkung, insbesondere zu einer Krafteinwirkung entlang der quer zur Transportrichtung 18 verlaufenden Richtung 28, auf Produkte 16 einer einzelnen zwischen zwei Querstäben 50 angeordneten Produktgruppe vorgesehen sind. Die Komprimierelemente 22 weisen bevorzugt eine identische Ausgestaltung auf. Es ist jedoch auch denkbar, dass die Komprimierelemente 22 unterschiedliche Ausgestaltungen aufweisen.

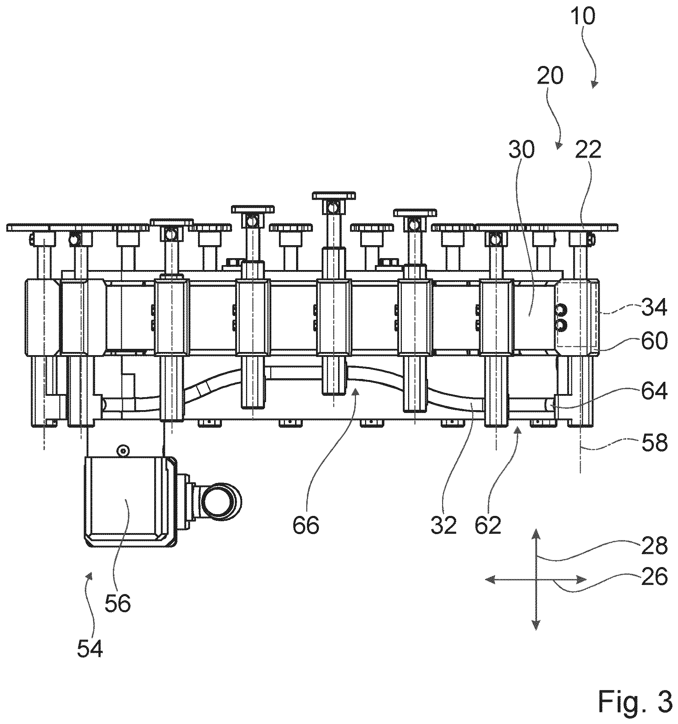

Das Komprimierelement 22 ist bevorzugt, insbesondere zumindest temporär, zusammen, vorzugsweise synchron, mit dem Transportelement 24 der Transporteinheit 14, an dem die Produkte 16 anordenbar sind, entlang der Transportrichtung 18 bewegbar. Das Komprimierelement 22 ist, insbesondere zumindest temporär, zusammen, vorzugsweise synchron, mit dem Transportelement 24 der Transporteinheit 14, an dem die Produkte 16 anordenbar sind, entlang der Transportrichtung 18 bewegbar. Die Komprimierungseinheit 20 umfasst bevorzugt zumindest eine Antriebseinheit 54 zu einer Bewegung des Komprimierelements 22/der Komprimierelemente 22 entlang der Transportrichtung 18 relativ zur Führungseinheit 52 der Transporteinheit 14 (vgl. Figuren 2 und 3). Die Antriebseinheit 54 der Komprimierungseinheit 20 ist vorzugsweise dazu vorgesehen, das Komprimierelement 22/die Komprimierelemente 22 umlaufend auf oder mit einer Führungs- und/oder Antriebsbahn 30, die seitlich versetzt relativ zum Transportelement 24 und/oder relativ zur Führungseinheit 52 der Transporteinheit 14, angeordnet ist, zu bewegen, insbesondere um das Komprimierelement 22/die Komprimierelemente 22 zumindest temporär, zusammen, vorzugsweise synchron, mit dem Transportelement 24 der Transporteinheit 14, an dem die Produkte 16 anordenbar sind, entlang der Transportrichtung 18 zu bewegen. Die Antriebseinheit 54 der Komprimierungseinheit 20 umfasst vorzugsweise zumindest einen Elektromotor 56. Insbesondere ist der Elektromotor 56 der Antriebseinheit 54 der Komprimierungseinheit 20 zu einem rotierenden Antrieb eines Antriebselements (hier nicht näher dargestellt), insbesondere einer Antriebsrolle o.dgl., der Antriebseinheit 54 der Komprimierungseinheit 20 vorgesehen, das auf eine, einem Fachmann bereits bekannte Art und Weise zu einem Übertragen einer Antriebskraft, insbesondere auf einen, vorzugsweise die Führungs- und/oder Antriebsbahn 30 bildenden, Antriebsriemen der Antriebseinheit 54 der Komprimierungseinheit 20, zu einer Bewegung des Komprimierelements 22/der Komprimierelemente 22 entlang der Transportrichtung 18 vorgesehen ist. Die Antriebseinheit 54 der Komprimierungseinheit 20 ist bevorzugt als Riementrieb ausgebildet, der den als Zahnriemen ausgebildeten Antriebsriemen umfasst, an dem das Komprimierelement 22/die Komprimierelemente 22 angeordnet ist/sind. Die Antriebseinheit 54 der Komprimierungseinheit 20 kann alternativ oder zusätzlich weitere, einem Fachmann als sinnvoll erscheinende Bauteile aufweisen, die zu einem Antrieb des Komprimierelements 22/der Komprimierelemente 22 entlang der Transportrichtung 18 vorgesehen sind, oder die Antriebseinheit 54 der Komprimierungseinheit 20 kann eine andere, einem Fachmann als sinnvoll erscheinende Ausgestaltung aufweisen, wie beispielsweise eine Ausgestaltung als elektrodynamisches Linear- oder Planartransportsystem, dessen Funktionsweise und Aufbau beispielsweise einem Fachmann unter den Produktbezeichnungen XTS^{®} oder XPlanar^{®} der Firma Beckhoff Automation GmbH & Co. KG bereits bekannt ist.

Das Komprimierelement 22 ist vorzugsweise entlang der zwei quer, insbesondere zumindest im Wesentlichen senkrecht, zueinander verlaufenden Richtungen 26, 28 beweglich relativ zur Transporteinheit 14 und/oder relativ zu einer Gehäuse- und/oder Führungseinheit 62 der Komprimierungseinheit 20 gelagert (vgl. Figuren 2 und 3). Bevorzugt weist das Komprimierelement 22, insbesondere alle Komprimierelemente 22 jeweils, eine Linearbewegungsachse 58 auf, die sich zumindest im Wesentlichen senkrecht zur Transportrichtung 18 erstreckt, insbesondere betrachtet in einer sich zumindest im Wesentlichen parallel zur Horizontalebene erstreckenden Ebene. Eine Bewegung des Komprimierelements 22/der Komprimierelemente 22 entlang der jeweiligen Linearbewegungsachse 58 ist vorzugsweise zu einer Realisierung einer Komprimierbewegung des Komprimierelements 22/der Komprimierelemente 22 zu einem Komprimieren von einzelnen Produktgruppen, insbesondere quer zur Transportrichtung 18 ausgerichteter Produktreihen, der mittels der Transporteinheit 14 transportierten Produkte 16 vorgesehen. Vorzugsweise verlaufen die zwei quer, insbesondere zumindest im Wesentlichen senkrecht, zueinander verlaufenden Richtungen 26, 28 zumindest im Wesentlichen parallel zur Horizontalebene. Vorzugsweise verläuft eine der zwei quer, insbesondere zumindest im Wesentlichen senkrecht, zueinander verlaufenden Richtungen 26, 28 zumindest im Wesentlichen parallel zur Transportrichtung 18 und die andere der zwei quer, insbesondere zumindest im Wesentlichen senkrecht, zueinander verlaufenden Richtungen 26, 28 verläuft bevorzugt zumindest im Wesentlichen senkrecht zur Transportrichtung 18, insbesondere betrachtet in einer sich zumindest im Wesentlichen parallel zur Horizontalebene erstreckenden Ebene. Vorzugsweise ist das Komprimierelement 22, insbesondere sind alle Komprimierelemente 22 zusammen, mittels der Antriebseinheit 54 der Komprimierungseinheit 20, insbesondere mittels des als Riemen, vorzugsweise als Zahnriemen, ausgebildeten Antriebselements, zumindest im Wesentlichen parallel zur Transportrichtung 18 relativ zur Transporteinheit 14 bewegbar. Bevorzugt ist das Komprimierelement 22, insbesondere sind alle Komprimierelemente 22 unabhängig voneinander vorzugsweise individuell, entlang der einen der zwei quer, insbesondere zumindest im Wesentlichen senkrecht, zueinander verlaufenden Richtungen 26, 28, die bevorzugt zumindest im Wesentlichen senkrecht zur Transportrichtung 18 verläuft, relativ zur Transporteinheit 14 bewegbar, insbesondere in Abhängigkeit von einer Position des Komprimierelements 22/der Komprimierelemente 22 relativ zum Transportelement 24 entlang der Transportrichtung 18. Das Komprimierelement 22/die Komprimierelemente 22 ist/sind vorzugsweise translatorisch entlang der einen der zwei quer, insbesondere zumindest im Wesentlichen senkrecht, zueinander verlaufenden Richtungen 26, 28, die bevorzugt zumindest im Wesentlichen senkrecht zur Transportrichtung 18 verläuft, relativ zur Transporteinheit 14 bewegbar, insbesondere in Abhängigkeit von einer Position des Komprimierelements 22/der Komprimierelemente 22 relativ zum Transportelement 24 entlang der Transportrichtung 18. Die Komprimierungseinheit 20 umfasst vorzugsweise zumindest ein, insbesondere fest mit dem als Riemen, vorzugsweise als Zahnriemen, ausgebildeten Antriebselement verbundenes, Lagerelement 60 (vgl. Figuren 2 und 3), an, insbesondere in, dem das Komprimierelement 22, vorzugsweise translatorisch, beweglich gelagert ist, insbesondere entlang der einen der zwei quer, insbesondere zumindest im Wesentlichen senkrecht, zueinander verlaufenden Richtungen 26, 28, die bevorzugt zumindest im Wesentlichen senkrecht zur Transportrichtung 18 verläuft. Bevorzugt umfasst die Komprimierungseinheit 20 eine Vielzahl an Lagerelementen 60, wobei vorzugsweise pro Komprimierelement 22 ein Lagerelement 60 vorgesehen ist, insbesondere um vorzugsweise eine individuelle translatorische bewegliche Lagerung jedes einzelnen Komprimierelements 22 zu realisieren. Es ist jedoch auch denkbar, dass mehrere Komprimierelemente 22 an einem einzelnen Lagerelement 60 beweglich gelagert sind.

Die Komprimierungseinheit 20 umfasst zumindest die, insbesondere umlaufende, vorzugsweise endlose, Führungs- und/oder Antriebsbahn 30, mittels der eine Bewegung des Komprimierelements 22 entlang der Transportrichtung 18 führbar und/oder hervorrufbar ist, wobei sich die Führungs- und/oder Antriebsbahn 30 größtenteils zumindest im Wesentlichen parallel zur Transportrichtung 18 erstreckt (vgl. Figur 2). Die Führungs- und/oder Antriebsbahn 30 ist vorzugsweise durch das als Riemen, vorzugsweise als Zahnriemen, ausgebildete Antriebselement definiert oder gebildet. Bevorzugt ist/sind das/die Lagerelement/e 60 fest mit dem als Riemen, vorzugsweise als Zahnriemen, ausgebildeten Antriebselement verbunden. Das/die Lagerelement/e 60 ist/sind vorzugweise entlang der Führungs- und/oder Antriebsbahn 30 bewegbar, insbesondere umlaufend um die Gehäuse- und/oder Führungseinheit 62 der Komprimierungseinheit 20. Weitere, einem Fachmann als sinnvoll erscheinende Ausgestaltungen der Führungs- und/oder Antriebsbahn 30 sind ebenfalls denkbar, wie beispielsweise eine Ausgestaltung der Führungs- und/oder Antriebsbahn 30 durch eine Statorbahn einer als elektrodynamisches Lineartransportsystem ausgebildeten Antriebseinheit der Komprimierungseinheit 20.

Die Komprimierungseinheit 20 umfasst bevorzugt zumindest ein Bewegungselement 32, insbesondere Steuerkurve, mittels dem das Komprimierelement 22, insbesondere infolge einer Bewegung des Komprimierelements 22 entlang der Transportrichtung 18, quer, insbesondere zumindest im Wesentlichen senkrecht, zur Transportrichtung 18 relativ zur Transporteinheit 14 und/oder relativ zur Gehäuse- und/oder Führungseinheit 62 der Komprimierungseinheit 20, insbesondere translatorisch, beweglich ist (vgl. Figur 3). Das Bewegungselement 32 ist vorzugweise durch eine Führungsnut der Komprimierungseinheit 20 definiert oder gebildet, in die ein Führungsfortsatz 64 des Komprimierelements 22/der Komprimierelemente 22 eingreift. Bevorzugt erstreckt sich das, insbesondere als Steuerkurve ausgebildete, Bewegungselement 32 bis auf einen Abschnitt 66, insbesondere bis auf einen Steuerkurvenabschnitt, des Bewegungselements 32, mittels dem eine Bewegung des Komprimierelements 22/der Komprimierelemente 22 entlang der quer, insbesondere zumindest im Wesentlichen senkrecht, zur Transportrichtung 18 verlaufenden Richtungen 28 relativ zur Transporteinheit 14 und/oder relativ zur Gehäuse- und/oder Führungseinheit 62 der Komprimierungseinheit 20 hervorrufbar ist, zumindest im Wesentlichen parallel zur Transportrichtung 18. Es ist jedoch auch denkbar, dass das Bewegungselement 32 eine andere, einem Fachmann als sinnvoll erscheinende Ausgestaltung und/oder Anordnung umfasst, wie beispielsweise eine Ausgestaltung als separater elektrischer Antriebsmotor für das Komprimierelement 22, als ein auf das Komprimierelement 22 einwirkender Hydraulik- oder Pneumatikzylinder o. dgl.

Vorzugsweise umfasst die Komprimierungseinheit 20 zumindest ein Dämpfungselement 34 (in Figur 2 lediglich gestrichelt angedeutet), insbesondere Feder, das zu einer Krafteinwirkung auf das Komprimierelement 22 vorgesehen ist, insbesondere um eine Krafteinwirkung des Komprimierelements 22 auf die Produktgruppe, insbesondere entlang der quer zur Transportrichtung 18 verlaufenden Richtung 28, zu dämpfen. Das Komprimierelement 22 ist mittels des Dämpfungselements 34 vorzugsweise federbelastet beweglich gelagert. Bevorzugt ist das Dämpfungselement 34, insbesondere die Feder, zu einer Krafteinwirkung auf das Komprimierelement 22 in eine auf die Transporteinheit 14 hin zugewandte Richtung vorgesehen, insbesondere um eine Krafteinwirkung des Komprimierelements 22 auf die Produktgruppe, insbesondere entlang der quer zur Transportrichtung 18 verlaufenden Richtung 28, zu dämpfen. Es ist jedoch auch denkbar, dass das Dämpfungselement 34, insbesondere die Feder, zu einer Krafteinwirkung auf das Komprimierelement 22 in eine von der Transporteinheit 14 abgewandte Richtung vorgesehen ist, insbesondere um eine Krafteinwirkung des Komprimierelements 22 auf die Produktgruppe, insbesondere entlang der quer zur Transportrichtung 18 verlaufenden Richtung 28, zu dämpfen. Das Dämpfungselement 34 ist vorzugsweise als Feder, insbesondere Spiralfeder, Tellerfeder o. dgl., ausgebildet. Es ist jedoch auch denkbar, dass das Dämpfungselement 34 eine andere, einem Fachmann als sinnvoll erscheinende Ausgestaltung aufweist, wie beispielsweise eine Ausgestaltung als Elastomerdämpfer, als Gasdruckfeder o. dgl. Das Dämpfungselement 34 stützt sich bevorzugt mit einer Seite an dem Komprimierelement 22 ab und mit einer weiteren Seite stützt sich das Dämpfungselement 34 vorzugsweise an dem Lagerelement 60 ab. Es ist jedoch auch denkbar, dass das Dämpfungselement 34 auf eine andere, einem Fachmann als sinnvoll erscheinende Weise mit dem Komprimierelement 22 zusammenwirkt, um eine Krafteinwirkung des Komprimierelements 22 auf die Produktgruppe, insbesondere entlang der quer zur Transportrichtung 18 verlaufenden Richtung 28, zu dämpfen.

Die Produkthandhabungsvorrichtung 10 umfasst bevorzugt zumindest eine Erfassungseinheit 36 zu einem Erfassen einer maximalen Erstreckung 38, insbesondere einer sich quer zur Transportrichtung 18 erstreckenden maximalen Länge, der Produktgruppe, wobei die Erfassungseinheit 36 zumindest ein Erfassungselement 40, insbesondere Distanzsensor, aufweist, das zu einem Erfassen der maximalen Erstreckung 38 mit dem Komprimierelement 22 zusammenwirkt (vgl. Figur 2). Die Erfassungseinheit 36 ist bevorzugt als elektronische, vorzugsweise optoelektronische, Erfassungseinheit 36, wie beispielsweise als Laserdistanzerfassungseinheit o. dgl., ausgebildet. Das Erfassungselement 40 ist vorzugsweise an einer dem Komprimierelement 22/der Komprimierelemente 22 gegenüberliegenden Seite der Transporteinheit 14 angeordnet. Vorzugsweise ist das Erfassungselement 40 dazu vorgesehen, ein Messsignal, insbesondere ein Laserimpuls, in Richtung des Komprimierelements 22 auszusenden. Bevorzugt ist die Erfassungseinheit 36 dazu vorgesehen, infolge einer Reflektion des ausgesandten Messsignals an einer dem Erfassungselement 40 zugewandten Oberfläche des Komprimierelements 22, das an einem dem Erfassungselement 40 abgewandten Ende einer komprimierten Produktgruppe an der Produktgruppe anliegt, eine Distanz zwischen dem Erfassungselement 40 und dem Komprimierelement 22 zu erfassen, die einer maximalen Länge der Produktgruppe entspricht. Es ist jedoch auch denkbar, dass die Erfassungseinheit 36 eine andere, einem Fachmann als sinnvoll erscheinende Ausgestaltung und/oder Funktionsweise zu einer Erfassung einer maximalen Länge von komprimierten Produktgruppen aufweist.

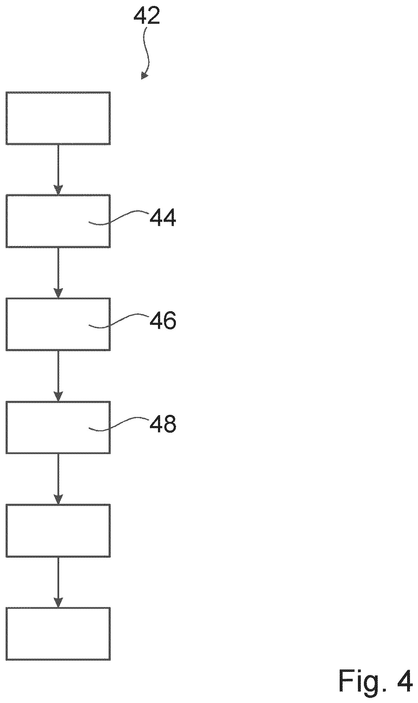

Figur 4 zeigt ein Ablaufdiagramm eines Verfahrens 42 zu einem Komprimieren von einzelnen Produktgruppen von transportierten Produkten 16 mittels der Produkthandhabungsvorrichtung 10 in einer schematischen Darstellung. Bei dem Verfahren 42 zu einem Komprimieren von einzelnen Produktgruppen von transportierten Produkten 16 mittels der Produkthandhabungsvorrichtung 10 wird in zumindest einem Verfahrensschritt 44 das Komprimierelement 22, insbesondere zumindest temporär, zusammen, vorzugsweise synchron, mit dem Transportelement 24 der Transporteinheit 14, an dem die Produkte 16 anordenbar sind, entlang der Transportrichtung 18 bewegt. In zumindest einem, insbesondere weiteren, Verfahrensschritt 46 des Verfahrens 42 wird bevorzugt eine Bewegung des Komprimierelements 22 entlang der Transportrichtung 18 von einer Bewegung des Komprimierelements 22 entlang der quer, insbesondere zumindest im Wesentlichen senkrecht, zur Transportrichtung 18 verlaufenden Richtung 28 überlagert. Vorzugsweise wird in zumindest einem, insbesondere weiteren, Verfahrensschritt 48 des Verfahrens 42 ein Abstand zwischen dem Komprimierelement 22 und dem Erfassungselement 40 der Erfassungseinheit 36 der Produkthandhabungsvorrichtung 10 erfasst, insbesondere um die maximale Erstreckung 38, insbesondere die sich quer zur Transportrichtung 18 erstreckende maximale Länge, der Produktgruppe zu ermitteln. Das Verfahren 42 zu einem Komprimieren von einzelnen Produktgruppen von transportierten Produkten 16 kann weitere, einem Fachmann als sinnvoll erscheinende Verfahrensschritte aufweisen. Zudem sollen auch mögliche Verfahrensschritte, die sich aus der Beschreibung der Figuren 1 bis 3 ableiten lassen, für das Verfahren 42 als offenbart gelten.

## Patentansprüche

1. Produkthandhabungsvorrichtung für eine Verpackungsmaschine, mit zumindest einer Transporteinheit (14) zu einem Transport von Produkten (16) entlang einer Transportrichtung (18) der Transporteinheit (14) und mit zumindest einer Komprimierungseinheit (20) zu einem Komprimieren von einzelnen Produktgruppen, insbesondere quer zur Transportrichtung (18) ausgerichteter Produktreihen, der mittels der Transporteinheit (14) transportierten Produkte (16), wobei die Komprimierungseinheit (20) zumindest ein, insbesondere translatorisch, beweglich gelagertes Komprimierelement (22), insbesondere Stößel, aufweist, **dadurch gekennzeichnet, dass** das Komprimierelement (22), insbesondere zumindest temporär, zusammen, vorzugsweise synchron, mit zumindest einem Transportelement (24) der Transporteinheit (14), an dem die Produkte (16) anordenbar sind, entlang der Transportrichtung (18) bewegbar ist.

2. Produkthandhabungsvorrichtung nach Anspruch 1, **dadurch gekennzeichnet, dass** das Komprimierelement (22) entlang zweier quer, insbesondere zumindest im Wesentlichen senkrecht, zueinander verlaufender Richtungen (26, 28) beweglich relativ zur Transporteinheit (14) gelagert ist.

3. Produkthandhabungsvorrichtung nach Anspruch 1 oder 2, **dadurch gekennzeichnet, dass** die Komprimierungseinheit (20) zumindest eine, insbesondere umlaufende, vorzugsweise endlose, Führungs- und/oder Antriebsbahn (30) umfasst, mittels der eine Bewegung des Komprimierelements (22) entlang der Transportrichtung (18) führbar und/oder hervorrufbar ist, wobei sich die Führungs- und/oder Antriebsbahn (30) größtenteils zumindest im Wesentlichen parallel zur Transportrichtung (18) erstreckt.

4. Produkthandhabungsvorrichtung nach einem der vorhergehenden Ansprüche, **dadurch gekennzeichnet, dass** die Komprimierungseinheit (20) zumindest ein Bewegungselement (32), insbesondere Steuerkurve, umfasst, mittels dem das Komprimierelement (22), insbesondere infolge einer Bewegung des Komprimierelements (22) entlang der Transportrichtung (18), quer, insbesondere zumindest im Wesentlichen senkrecht, zur Transportrichtung (18) relativ zur Transporteinheit (14), insbesondere translatorisch, beweglich ist.

5. Produkthandhabungsvorrichtung nach einem der vorhergehenden Ansprüche, **dadurch gekennzeichnet, dass** die Komprimierungseinheit (20) zumindest ein Dämpfungselement (34), insbesondere Feder, umfasst, das zu einer Krafteinwirkung auf das Komprimierelement (22) vorgesehen ist, insbesondere um eine Krafteinwirkung des Komprimierelements (22) auf die Produktgruppe, insbesondere entlang einer quer zur Transportrichtung (18) verlaufenden Richtung (28), zu dämpfen.

6. Produkthandhabungsvorrichtung zumindest nach dem Oberbegriff des Anspruchs 1, insbesondere nach einem der vorhergehenden Ansprüche, **gekennzeichnet durch** zumindest eine Erfassungseinheit (36) zu einem Erfassen einer maximalen Erstreckung (38), insbesondere einer sich quer zur Transportrichtung (18) erstreckenden maximalen Länge, der Produktgruppe, wobei die Erfassungseinheit (36) zumindest ein Erfassungselement (40), insbesondere Distanzsensor, aufweist, das zu einem Erfassen der maximalen Erstreckung (38) mit dem Komprimierelement (22) zusammenwirkt.

7. Verfahren zu einem Komprimieren von einzelnen Produktgruppen von transportierten Produkten (16) mittels einer Produkthandhabungsvorrichtung, insbesondere mittels einer Produkthandhabungsvorrichtung nach einem der vorhergehenden Ansprüche, **dadurch gekennzeichnet, dass** in zumindest einem Verfahrensschritt (44) ein, insbesondere das, Komprimierelement (22), insbesondere zumindest temporär, zusammen, vorzugsweise synchron, mit einem, insbesondere mit dem, Transportelement (24) einer, insbesondere der, Transporteinheit (14), an dem die Produkte (16) anordenbar sind, entlang einer, insbesondere der, Transportrichtung (18) bewegt wird.

8. Verfahren nach Anspruch 7, **dadurch gekennzeichnet, dass** in zumindest einem Verfahrensschritt (46) eine Bewegung des Komprimierelements (22) entlang der Transportrichtung (18) von einer Bewegung des Komprimierelements (22) entlang einer quer, insbesondere zumindest im Wesentlichen senkrecht, zur Transportrichtung (18) verlaufenden Richtung (28) überlagert wird.

9. Verfahren zumindest nach dem Oberbegriff des Anspruchs 7, insbesondere nach Anspruch 7 oder 8, **dadurch gekennzeichnet, dass** in zumindest einem Verfahrensschritt (48) ein Abstand zwischen dem Komprimierelement (22) und einem Erfassungselement (40) einer Erfassungseinheit (36) der Produkthandhabungsvorrichtung erfasst wird, insbesondere um eine maximale Erstreckung (38), insbesondere eine sich quer zur Transportrichtung (18) erstreckende maximale Länge, der Produktgruppe zu ermitteln.

10. Verpackungsmaschine zu einem Verpacken von Produkten (16), insbesondere Lebensmitteln, mit zumindest einer Produkthandhabungsvorrichtung nach einem der Ansprüche 1 bis 6.
